(19)

Europäisches
Patentamt
European
Patent Office
Office européen
des brevets

(11) **EP 2 309 451 B1**

(12) **EUROPEAN PATENT SPECIFICATION**

(45) Date of publication and mention
of the grant of the patent:
**02.01.2013  Bulletin 2013/01**

(51) Int Cl.:
***G06T 7/00*** *(2006.01)*

(21) Application number: **09171340.4**

(22) Date of filing: **25.09.2009**

(54) **Method and system for self-calibration of asynchronized camera networks**

Verfahren und System zur Selbstkalibration unsynchronisierter Kamera-Netze

Procédé et système d'auto-étalonnage de réseaux de caméra asynchrones

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**13.04.2011  Bulletin 2011/15**

(73) Proprietor: **Deutsche Telekom AG**
**53113 Bonn (DE)**

(72) Inventors:
• **Swaminathan, Rahul**
  **10119 Berlin (DE)**
• **Nischt, Michael**
  **10178 Berlin (DE)**

(74) Representative: **Vossius & Partner**
**Siebertstrasse 4**
**81675 München (DE)**

(56) References cited:
• **MAMI NOGUCHI ET AL: "Geometric and Timing Calibration for Unsynchronized Cameras Using Trajectories of a Moving Marker" IEEE WORKSHOP ON APPLICATIONS OF COMPUTER VISION, 2007. IEEE, PI, 1 February 2007 (2007-02-01), pages 1-6, XP031055129 ISBN: 978-0-7695-2794-9**
• **YARON CASPI ET AL: "Feature-Based Sequence-to-Sequence Matching" INTERNATIONAL JOURNAL OF COMPUTER VISION, KLUWER ACADEMIC PUBLISHERS, BO, vol. 68, no. 1, 1 March 2006 (2006-03-01), pages 53-64, XP019410096 ISSN: 1573-1405**
• **MOURAGNON E ET AL: "3D reconstruction of complex structures with bundle adjustment: an incremental approach" IEEE INTERN ATIONAL CONFERENCE ON ROBOTICS AND AUTOMATION, 2006. PROCEEDINGS, ORLANDO, FL, USA MAY 15-19, 2006, PISCATAWAY, NJ, USA, IEEE, 15 May 2006 (2006-05-15), pages 3055-3061, XP010921728 ISBN: 978-0-7803-9505-3**
• **MEGHNA SINGH ET AL: "Optimization of Symmetric Transfer Error for Sub-frame Video Synchronization" 12 October 2008 (2008-10-12), COMPUTER VISION ECCV 2008; LECTURE NOTES IN COMPUTER SCIENCE, SPRINGER BERLIN HEIDELBERG, BERLIN, HEIDELBERG, pages 554 - 567 , XP019109224 ISBN: 9783540886853 * abstract * * page 556, line 23 - page 557, line 20 * * page 558, lines 23-28 ***

## Description

### Field of the Invention

The invention generally relates to imaging methods and systems, and more particularly to a method, in particular a computer-implemented method, of self-calibration of asynchronized camera networks. In more detail, the invention provides a method to fully calibrate the asynchronized cameras of differing frame rates from the acquired video content directly.

### Background of the Invention

Calibration of camera networks is a well-known problem in the field. However, most previous attempts assume all the cameras in the network to be synchronized which is especially difficult over large distances.

Camera networks are increasing in importance due to many applications including surveillance (S. Sinha and M. Pollefeys. Synchronization and calibration of a camera network for 3d event reconstruction from live video. In Proc. CVPR, Washington, DC, USA, 2005), human motion-capture (T. Svoboda, D. Martinec, and T. Pajdla, A convenient multi-camera self-calibration for virtual environments. In PRESENCE: Teleoperators and Virtual Environments, MIT Press, 2005) and teleimmersive and Free-Viewpoint TV applications (S. Sinha and M. Pollefeys. Synchronization and calibration of camera networks from silhouettes. In Proc. ICPR., pages 116-119, Washington, DC, USA, 2004; T. Matsuyama, X. Wu, T. Takai, and S. Nobuhara. Real-time 3d shape reconstruction, dynamic 3d mesh deformation, and high fidelity visualization for 3d video. CVIU, 96(3):193- 434, 2004). Beyond these seemingly constrained environments, one can also imagine combining web-cameras or surveillance cameras from multiple sources to together compute meaningful geometric interpretations of the observed scene. In such cases one cannot assume the cameras to have the same properties such as frame rate nor be assumed to be synchronized.

There has been considerable work within the field of cameras calibration. More pertinent to this work is the problem of camera network calibration also addressed in many previous works (R. Hartley. Estimation of relative camera positions for uncalibrated cameras. In ECCV, pages 579-587, 587, 1992). However, they assume that the network of cameras is synchronized using specialized hardware devices. Many of these methods rely on point correspondences between multiple views to estimate the extrinsic and intrinsic parameters of the cameras. A common and reliable approach is to use a small LED based point-light source visible in multiple views to get simple and accurate matches.

The paper by Mami Noguchi et al., "Geometric and Timing Calibration for Unsynchronized Cameras Using Trajectories of a Moving Marker", IEEE Workshop on Applications of Computer Vision, 2007, IEEE, PI, 1 February 2007, pages 1 - 6, ISBN: 978-0-7695-2794-9 teaches geometric and timing calibration of unsynchronised camras using trajectories of a moving marker. The frame rates of all cameras are equal.

Yaron Caspi et al., "Feature-Based Sequence-to-Sequence Matching", International Journal of Computer Vision, Kluwer Academic Publishers, BO, vol. 68, no. 1, 1 March 2006, pages 53 - 64, ISSN: 1573-1405 deals with matching of trajectories per view in a first step so as to disambiguate the correspondence problem and to reduce complexity. The stationary or jointly moving cameras are modelled by a homography or the fundamental matrix. The method copes with differing frame rates between cameras by assuming their ratio as fixed.

The publication by Etienne Mouragnon et al., "3D reconstruction of complex structures with bundle adjustment: an incremental approach", Proceedings IEEE International Conference on Robotics and Automation, Orlando, FL, USA, MAY 15 - 19, 2006, PISCATAWAY, NJ, USA, IEEE, 15 May 2006, pages 3055 - 3061, ISBN: 978-0-7803-9505-3 discloses 3D structure from motion based on long sequences by incremental bundle adjustment using pre-calibrated intrinsic parameters.

However, none of these prior approaches can cope with ad-hoc networks consisting of cameras of differing frame rates and being unsynchronized. Asynchronization is detrimental to any geometric reasoning of dynamic scenes. Asynchronization causes a moving scene point to not be imaged at the same time instant by the multiple views. Thus, the relative motion of the scene point between "corresponding video frames" leads to huge errors in its depth estimate leading to erroneous shape estimates. Furthermore, asynchronization is far more detrimental to camera calibration.

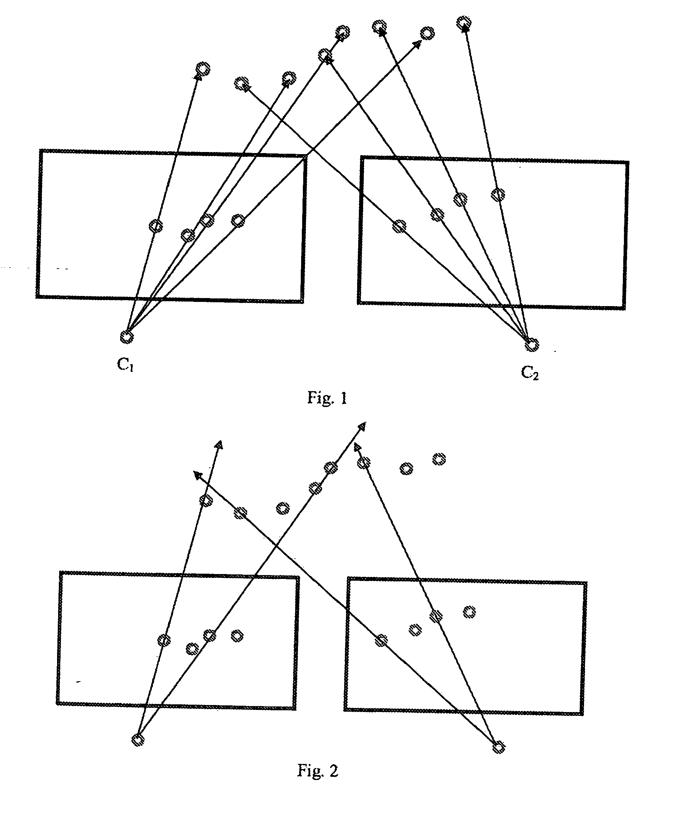

Fig. 1 shows by way of an example how a single point moves along a trajectory, and this is viewed by two cameras C1 and C2. Due to a time shift existing among these two cameras, different trajectories are captured by the two cameras. Thus, a single point captured by camera C1 (for example, the second point captured by camera C1) in fact lies in between the first two points captured by camera C2.

Since the cameras are not synchronized, a triangulation leads to hallucinated erroneous depth, as shown in Fig. 2. In order for calibrating the two cameras, said point captured by camera C1 lying in between two points captured by camera C2 needs to be located on the trajectory of camera C2.

Camera calibration in general means to know the location of one camera relative to another camera. Each camera has its individual parameters, namely intrinsic parameters, such as focal length, depth etc., and extrinsic parameters, such as rotation and translation. In case of a network of cameras, more cameras are used to compute depth. However, the intrinsic and extrinsic parameters then need to be known.

In time domain, the relation can be described as follows:

$$t_2 = \alpha t_1 + \beta$$

$\alpha$ denotes differences in frequency (for example $\alpha=2$ for 10 Hz / 20 Hz), and $\beta$ denotes the time shift.

There have been limited attempts at calibrating a network in spite of synchronicity. It is typically assumed that all the cameras have the same frame rate and only be unsynchronized by a time lag.

The approach presented in K. Daniilidis, J. Mulligan, R. McKendall, G. Kamberova, D. Schmid, and R. Bajcsy. Real-time 3d tele-immersion, 2000, uses homography and fundamental matrix based constraints to estimate synchronization. The differences in frame rates are modelled as well. However, the authors assume them to be known. Thus, they only estimate the time-shift between a pair of cameras. Furthermore, the time-shift is estimated with an integer approximation initially followed by refinement using a linear interpolation.

**Summary of the Invention**

The invention provides a method of self-calibrating asynchronized camera networks comprising a plurality of cameras, C, comprising the steps of:

a) providing digital image data from at least two cameras of said camera network, wherein for each pair of cameras a frame with frame index $f_1$, in a first camera, $C_1$, is related to a frame with frame index $f_2$, of a second camera, $C_2$, as $f_2 = \alpha \cdot f_1 + \beta$, wherein $\alpha$ and $\beta$ are parameters representing the asynchonization between the two cameras;

b) modeling the trajectory of matched features across multiple frames per camera of said pair of cameras using spline interpolation; using splines as $p(f_2) = \sum_{i=0}^{N} g_i(f_2) \cdot C_i$, wherein $g_1(\cdot)$ and $C_i$ denote the basis function and spline coefficients respectively and $p$ the image coordinate as a function of the frame number;

c) performing a non-linear search for the synchronization parameters $\alpha$ and $\beta$ for said pair of cameras iterating until convergence on the basis of the modelled trajectories.

According to a preferred embodiment, step c) comprises the steps of:

c1) estimating for every point $x_1$ in the image of the first camera, $C_1$, its corresponding sub-frame image location $s$ ($\alpha f_1 + \beta$) using hypothesized synchronization parameters $\alpha$ and $\beta$;

c2) linearly estimating the fundamental matrix F representing epipolar geometry constraints for the estimated image point locations;

c3) calculating the geometric error for the estimated fundamental matrix F; and

c4) minimizing the geometric error by repeating steps c1) through c3) for new synchronization parameters $\alpha$ and $\beta$.

The method epipolar geometry constraint is preferably given by $x_1' F s(\alpha f_1 + \beta) = 0$.

According to an alternative embodiment, step c) comprises the steps:

c1) estimating for every point $x_1$ in the image of the first camera, $C_1$, its corresponding sub-frame image location $s$ ($\alpha f_1 + \beta$) using hypothesized synchronization parameters $\alpha$ and $\beta$

c2) linearly estimating the homography matrix H representing homography constraints for the estimated image point locations;

c3) calculating the geometric error for the estimated homography H; and

c4) minimizing the geometric error by repeating steps c1) through c3) for new synchronization parameters $\alpha$ and $\beta$.

The homography constraint preferably is given by $x_1 \cong H \cdot s(\alpha f_1 + \beta)$.

It is preferred according to the invention to perform steps a) through c) for all pairs of cameras of said camera network with overlapping views, resulting in a number of relative synchronization parameters $(\alpha, \beta)_{ij}$ for all pairs of cameras with overlapping views, and determining a globally consistent set of pair-wise synchronization parameters,

The method preferably comprises the steps of:

1) for all matched image points viewed by at least two cameras in a set of cameras $C_C$, computing their effective 3D locations, resulting in a cloud of known 3D points P in the scene, wherein $C_C$ denote the set of currently calibrated cameras among the set of all cameras;
2) for every camera $C_n = C \setminus C_C$ that is not yet calibrated, determining the subset $C'_C$ that observe of points ($\geq 6$) in P;
3) using known 3D points and their image projections, linearly determining their projection matrices $P'_C$;
4) updating the set of calibrated cameras to also include the newly calibrated cameras $C'_C$; and
5) repeating steps 1) through 4) until convergence is achieved.

The method preferably comprises the steps of decomposing the projection matrices into their corresponding intrinsic and extrinsic matrices, and performing non-linear estimation of all camera parameters for all cameras in the network.

The invention also provides a system for self-calibrating asynchronized camera networks comprising a plurality of cameras, C, comprising means for receiving digital image data from at least two cameras of said camera network, wherein for each pair of cameras a frame with frame index $f_1$ in a first camera, $C_1$, is related to a frame, with frame index $f_2$, of a second camera, $C_2$, as $f_2 = \alpha \cdot f_1 + \beta$, herein $\alpha$ and $\beta$ are parameters representing the asynchonization between the two cameras; means for modelling the trajectory of matched features across multiple frames per camera of said pair of cameras using splines interpolation using splines as $$f_2 = \alpha \cdot f_1 + \beta,$$ wherein $g_1(\cdot)$ and $C_i$ denote the basis function and spline coefficients respectively and $p$ the image coordinate as a function of the frame number; and means for performing a non-linear search for the synchronization parameters $\alpha$ and $\beta$ for said pair of cameras iterating until convergence on the basis of the modelled trajectories.

In contrast to existing approaches, the methods according to the invention have no restrictions on the observed content. Instead every scene point can be a potentially independent moving object. Further, the fundamental matrix is estimated together with synchronization. This is done using a spline based approximation model, which is much closer to natural point movement. Finally, the contribution of the invention includes globally consistent synchronization of a complete camera network in which not all views need to overlap each other.

The invention provides for automatic calibration for example using live video content. Points are tracked across video frames as well as across camera views, In doing so, the tracked points replace the commonly used LED light source. Consistent network calibration and synchronization is performed based on sufficient pairs of calibrated synchronized cameras.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Brief description of the drawings**

Further objects, features, and advantages of the invention will become apparent from the following detailed description taken in conjunction with the accompanying Figures showing illustrative embodiments if the invention, in which:

Fig. l    is a schematic diagram illustrating capturing a moving object by two non- synchronized cameras;

Fig. 2    is a schematic diagram illustrating for the example of Fig. 1 erroneous depth obtained by triangulation;

Fig. 3    is a schematic diagram illustrating for the example of Fig. 1 spline trajectory interpolation according to the invention;

Fig. 4    is a diagram showing an exemplary homography constraint;

Fig. 5    is a diagram showing for the example of Fig. 4 how spline interpolation according to the invention overcomes homography constraint;

Fig. 6 illustrates by way of an example camera network calibration according to the invention;

Fig. 7 illustrates the estimated camera pose after synchronization calibration according to the invention, for a simulation setup consisting of four asynchronous cameras with the estimation parameters as shown;

Fig. 8 illustrates synchronization calibration using the epipolar constraint on four cameras;

Fig. 9 illustrates image reprojection errors (solid curve) for the four cameras (a-d) after synchronization and camera calibration plotted against various noise levels; the dotted curve represents vaseline error for noisy camera calibration with synchronized cameras;

Fig. 10 illustrates synchronization calibration using the homography constraint on four cameras;

Fig. 11 illustrates typical image trajectories of a moving LED marker and (Figs. 11a and 11b) and features matched and tracked across two unsynchronized cameras (Figs. 11c, 11d); the trajectories were used for synchronization estimation and camera calibration;

Fig. 12 illustrates image reprojection errors using simulated 3D points with ground truth and estimated camera parameters; the two columns compare the synchronous (left) and asynchronous case (right). The errors are presented as a percentage of the diagonal distance from the image center; Each row shows the result for a single experiment: Figs 11a, 11b homography based constraint with laser pointer, Figs. 11c, 11d epipolar constraint with light marker, Figs. 11e, 11f epipolar constraint with scene features;

Fig. 13 illustrates error in camera pose estimation after calibration using tracked features and the epipolar based constraint with unsynchronized cameras; and

Fig. 14 illustrates the effects of asynchronization on 3D reconstruction.

## Description of preferred embodiments

Synchronization of cameras is particularly critical in dynamic scenes for applications that require combining image information across cameras. Object motion coupled with asynchronized image capture leads to scene points being imaged at geometrically inconsistent image points. According to a first aspect, the invention provides a method to model asynchronization and utilize image motion to establish multi-view geometric constraints in the presence of asynchronization.

## The Synchronization Model

As mentioned above, asynchronization in cameras arises from two main sources. First, the cameras may not start capturing video at the same time instant. This time delay introduces a constant time shift between video frames. Furthermore, not all cameras in the network run at the same exact frame-rate introducing a constant factor between capture rates.

The result of these two factors is a linear relationship between the times at which the two asynchronized cameras acquire images. According to the invention, this is transmitted to a linear relationship between the frame indices of the cameras. Thus a frame $f_1$ in camera $C_1$ relates to frame $f_2$ of camera $C_2$ as:

$$f_2 = \alpha \cdot f_1 + \beta \qquad (1)$$

Calibrating for asynchronization between cameras therefore reduces to estimating these two parameters ($\alpha$, $\beta$). While prior approaches estimate time shift $\beta$ alone, assuming all cameras run at exactly the same frame rate, the invention provides for a complete synchronization calibration.

Due to asynchronous image capture, two cameras ($C_1$, $C_2$) generally never capture a moving scene point at the same time instant. Thus given its image location in frame $f_1$ of camera $C_1$, its exact image location in the view of camera $C_2$ is unknown. However the above synchronization model provides us a bound on its location in terms of neighbouring frames: ($\lfloor f_2 \rfloor$, $\lceil f_2 \rceil$), where $f_2$ is the frame index for camera $C_2$ as per Eq. 1.

To achieve sub-frame feature localization, according to the invention the trajectory of matched features is modelled across multiple frames using splines as:

$$p(f_2) = \sum_{i=0}^{N} g_i(f_2) \cdot C_i, \qquad (2)$$

were $g_i(\cdot)$ and $C_i$ denote the basis function and spline coefficients respectively and $p$ the image coordinate as a function of the frame number. Together with the synchronization model, the invention thus provides a simple parametric model to estimate the synchronized image location in camera $C_2$.

Multiple views of any scene are generally constrained by either the epipolar geometry in terms of the fundamental F or homography H matrix. When two cameras are synchronized, the F or H matrices remain constant across consecutive video frame pairs. However, due to asynchronization, this does not hold true due to motion of the scene points move between frame capture times. The invention uses the above models for synchronization and image trajectories of moving scene points to derive similar multi-view constraints for unsynchronized cameras. Furthermore, these constraints will be utilized to also calibrate for the asynchronization between the cameras.

**Epipolar Geometry and Synchronization**

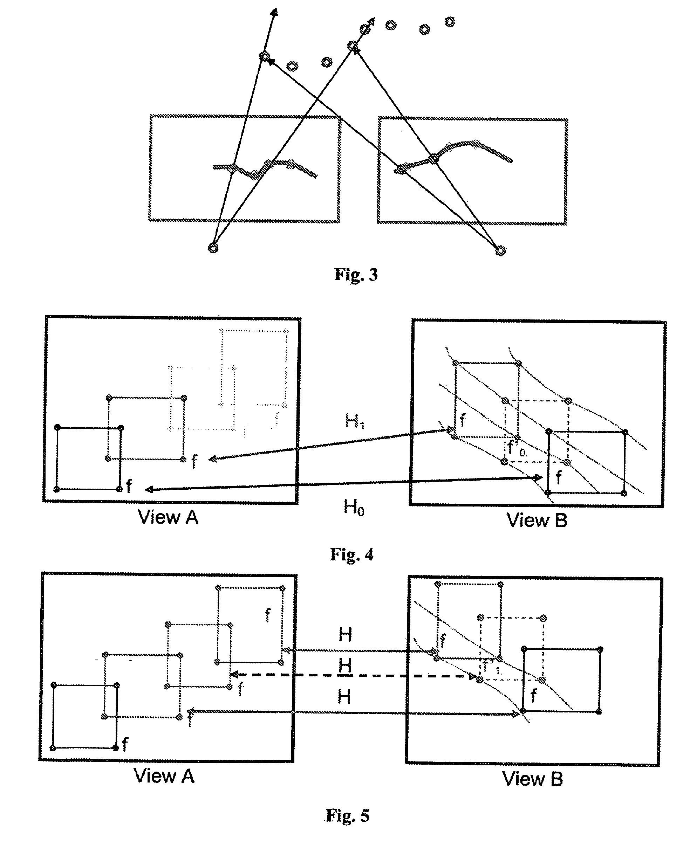

First, the approach using epipolar geometry will be described. Let $x_1$ denote a point in frame $f_1$ of camera $C_1$ The corresponding image trajectory in camera $C_2$ is modelled using splines as in Eq. 2 denoted by $s(f_2)$ as shown in Fig. 3. Given the synchronization parameters $(\alpha, \beta)$ and the synchronization model as in Eq. (1), the epipolar constraint is given by:

$$x_1^t F s(\alpha f_1 + \beta) = 0 \qquad (3)$$

The above epipolar constraint relates a point $x_1$ in one view to its potential position along the tracked trajectory in the second view enforcing synchronization as well. One can view this constraint as allowing matched points to move along their motion trajectories in order to accommodate for asynchronization.

**Homographics and Synchronization**

The alternative approach is based on the homography constraint between unsynchronized cameras observing points moving in a plane. Considering again a point $x_1$ in frame $f_1$ of camera $C_1$, it is matched and trajectory $s(f_2)$ is tracked in another view $C_2$. The homography based constraint in the presence of asynchronization is then:

$$x_1 \cong H \cdot s(\alpha f_1 + \beta) \qquad (4)$$

Again, it is accounted for asynchronization by allowing the matching point in the second view to move along the trajectory $s(\cdot)$ controlled by the synchronization parameters $(\alpha, \beta)$.

The homography constraint is shown in Figs. 4 and 5 by way of a simple example. In Fig. 4, view B has half the frame rate as view A and started exactly one frame delayed. Ignoring in this example the asynchronous image acquisition leads to a constraint violation H0 $\neq$ H1. With $\alpha$=0.5 and $\beta$=0.0, H is constant across views if their frames are related correctly $f_B = \alpha \cdot f_A + \beta = 0.5 \cdot f_A$, as shown in Fig. 5.

Traditional algorithms for camera network calibration usually rely on multiple cameras viewing the same 3D scene point. In practice this is often achieved by synchronizing cameras and moving a simple target such as a LED in the dark within the space being observed by the cameras. Also, two cameras are assumed to be calibrated using traditional approaches. The invention addresses the issue of calibrating unsynchronized cameras in a similar network. Clearly synchronization calibration is critical to achieving robust network camera calibration.

For synchronization calibration it is required that a tracked scene point should be observed by the cameras within the same time window. Moreover, multiple ($N$) such scene point "locations" are needed to be observed by the cameras. When using the epipolar constraint in Eq. (3), $N \geq 8$ and if using the homography based constraint in Eq. (4), $N \geq 4$.

According to the invention, calibration is then posed as a non-linear search for the synchronization parameters $(\alpha, \beta)$ iterating until convergence over the following two steps:

- **Step 1:** Use hypothesized synchronization parameters $(\alpha, \beta)$, to estimate for every point $x_1$ in cameras $C_1$, its corresponding sub-frame image location $s(\alpha f_1 + \beta)$.
- **Step 2:** Linearly estimate either the fundamental matrix F or homography H as required. The geometric error for the computed matrices (F or H) is the objective function then to be minimized.

According to the invention, standard minimization procedures in MATLAB can be used, which are dependent on the good initial estimates. Therefore according to the invention, the search is seeded with $\alpha = f_1 / f_2$ where $f_i$ is the

number of frames captured by camera i and $\beta=0$.

The search described above is performed for all camera pairs (i, j) with overlapping views, yielding relative synchronization parameters $(\alpha, \beta)_{ij}$. In theory, such a direct relation between two views should be consistent with any composition of others, e.g. $(\alpha, \beta)_{ij} = (\alpha, \beta)_{ik} \circ (\alpha, \beta)_{kl} \circ (\alpha, \beta)_{lj}$. However, this might not be the case if the search terminates in a local minimum. In which case the directly estimated residual error $r_{ij}$ will be higher than that of some composition. According to a preferred embodiment of the invention, the parameters from the direct estimation are replaced with those obtained by the composition which has a minimal cumulative error. This problem is thus solved in a graph-theoretic sense by simply computing the shortest path between node i and j of the undirected graph where any edge (i, j) has length $r_{ij}$. The result is a globally consistent set of pair-wise synchronization parameters.

## Camera Calibration

Given a camera network, the invention provides according to its **second aspect** an approach to robust calibration of each camera's intrinsic and extrinsic parameters. At least two cameras in the network are assumed to be pre-calibrated for their intrinsics and *optionally* extrinsics. Although according to a preferred embodiment it is assumed that at least two cameras are pre-calibrated, it is in principle not necessary to have a pre-calibrated pair. According to the invention the network can be calibrated using only the matched image features under stronger assumptions, such as zero skew and known principle point.

Let $C$ denote the set of all cameras in the network and $C_C \in C$ denote the set of currently calibrated cameras. The calibration proceeds iteratively until convergence is achieved following the steps:

- **Step 1:** For all matched image points viewed by at least two cameras in $C_C$ their effective 3D locations are computed. This provides a cloud of known 3D points P in the scene.
- **Step 2:** For every camera $C_n = C \setminus C_C$ that is not yet calibrated, the subset $C'_C$ is determined that observe of points ($\geq 6$) in P. Thus, using known 3D points and their image projections, their projection matrices $P'_C$ are linearly determined.
- **Step 3:** The set of calibrated cameras is now updated to also include the newly calibrated cameras $C'_c$. Iterations proceed by repeating steps 1, 2 and 3 until convergence is achieved.

At every step the enlarged calibrated camera set is used to compute newer sets of 3D points that further enable calibration of more cameras in the network. Convergence is defined in terms of the effective minimization of the average image reprojection error for all cameras in the network. Finally, the projection matrices are decomposed into their corresponding intrinsic and extrinsic matrices. At this point non-linear search for a parameterized projection matrix is performed for all the cameras in the network.

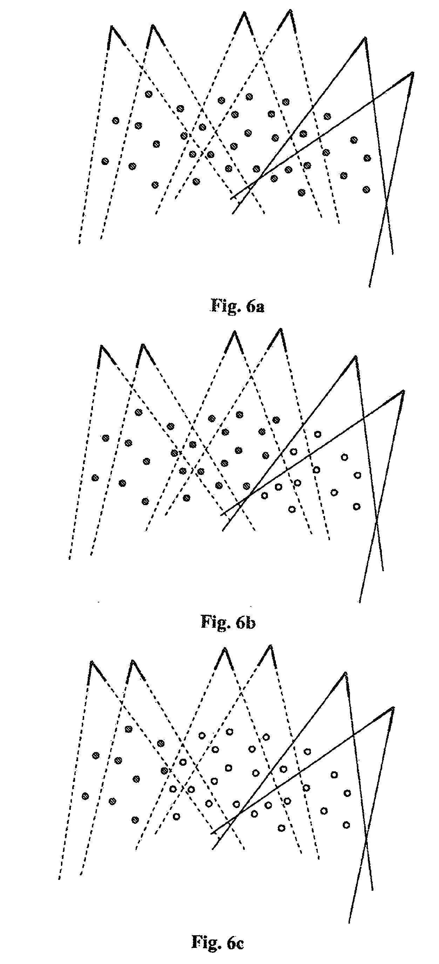

Figs. 6a through 6c show this procedure step by step by way of an example.

In Fig. 6a, six cameras are shown and it is assumed that two right pair of cameras is initially calibrated. These two cameras are shown with bold lines, whereas the other cameras are shown with dashed lines. In the first step, the 3D locations are reconstructed for all points in both views. These are highlighted in Fig. 6b in white.

For those cameras that also observe image points viewed by the first two cameras, the camera projection matrices can now be estimated on the basis of the shared views. These are in Fig. 6b the two cameras in the middle these two cameras share views with the first two cameras, whereas the two cameras to the left do not share view with the two cameras to the right.

The procedure is now repeated with the new extended set of calibrated cameras to reconstruct a larger set of 3D points. This is shown in Fig. 6c. This procedure is repeated until all cameras are calibrated and until convergence is obtained. Finally, a non-linear estimation of all camera parameters is performed.

Insofar the mathematical constraints and algorithms for point matched and trajectory based calibration have been addressed. It is now described in more detailed how these point matches and trajectories are computed across multiple views (cameras) according to preferred embodiments of the invention.

According to a first preferred embodiment, calibration is based on tracking. It is briefly described the approach to matching features across multiple frames and views.

A first alternative is based on inter-frame tracking. A variation of the traditional SIFT matching algorithm is performed in a frame to frame basis to establish matches. Instead of just matching a feature from the current frame to the best candidate in the previous frame, the invention also enforces this "best match" to be mutually reciprocal. Furthermore, local position and scale constraints are enforced to further filter out outliers in this matching process. However, it is preferred according to the invention to allow features to be dropped and re matched at the next frame as well. This enables modelling of long sequences of image feature trajectories.

A second alternative is inter-camera tracking: Similar to matching between frames of video from a single view, matches are defined between multiple sequences or trajectories across views. The distance between two sequences in feature space is defined as the minimum distance between any two of their component feature vectors.

According to another preferred embodiment, calibration is based on point light. Accordingly, in order to circumvent problems with unreliable tracking and noise compounded with systematic drift in feature localization, also LED or laser pointer based small light blob tracking approach can be used. The LED is useful for the epipolar constraint based approach but not for the homography constraint. Instead, a simple plane plus laser pointer based solution is preferred according to the invention. The laser light is shined on a planar screen visible to a set of cameras. Any trajectory in one view is thus related to another by a homography. However, multiple plane positions are required for complete (intrinsics and extrinsics) camera calibration.

## Simulation based Experiments

In the following, extensive experiments with simulations to measure quantitatively the robustness of the invention are described. In all experiments, uniformly random noise ($\pm\sigma$) was added to the projected image points.

## Simulation Setup

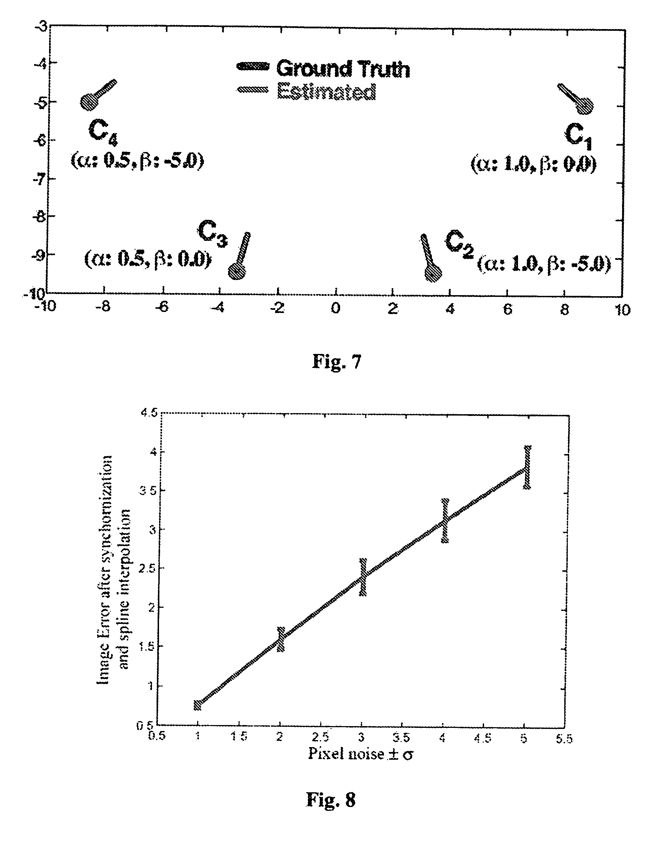

A camera network consisting of four asynchronous cameras $C_{1...4}$ has been simulated. Cameras $C_1$ and $C_2$ are assumed to be calibrated for their intrinsic and extrinsic camera matrices. The relative poses of the cameras, their frame rates and simulated synchronization parameters ($\alpha$ and $\beta$) are all indicated in Fig. 7.

## Scene Dynamics

The simulated scene is dynamic consisting of sets of moving points. In principle points moving in a (i) planar and (ii) a non-planar fashion are simulated. The points moving in a plane are used together with the homography based approach. While, the non-planar set of moving points are used in the synchronization calibration approach using the fundamental matrix.

## Fundamental Matrix based Calibration

The following first describes the results of estimating the synchronization parameters using the fundamental matrix based approach presented above.

Upon synchronization calibration, estimates of the synchronization parameters ($\alpha$, $\beta$) are obtained. Using these values it can therefore estimated for every point in one view its *synchronized* image projection in another view and *vice versa.* However, the true image projection of the point is also known if the cameras were truly synchronized. Thus, one simple measure of accuracy is the distance between its estimated position after calibration and its ground truth image projection. Fig. 8, illustrates this image projection error after synchronization calibration.

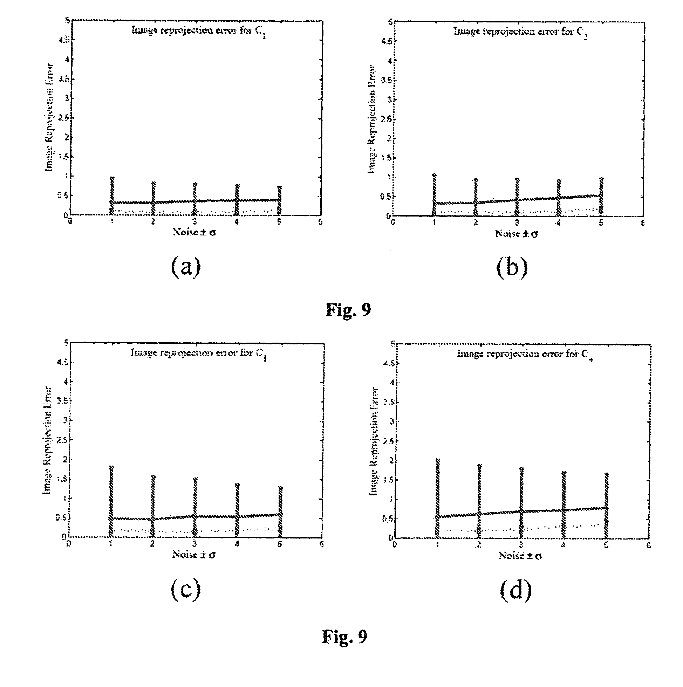

As explained above, the epipolar constraint based synchronization calibration is quite robust even in the presence of noise. Thus, further results on complete camera network calibration are known in the presence of asynchronicity. The estimated synchronization parameters are then used to accomplish complete network calibration using the algorithm described above for camera calibration. As shown in Fig. 7, the estimated extrinsics of the four cameras even in the presence of $\sigma = \pm 5$ pixels of uniformly distributed noise is quite robust. A better idea of robustness is achieved by measuring the image reprojection errors. Fig. 9 (a-d) (solid curve) shows the image reprojection error after camera calibration (including synchronization estimation) at various noise levels $\sigma \in [1,5]$. The baseline to camera calibration is also presented (dotted curve). This corresponds to pure camera calibration with noisy data however with synchronized cameras.

## Homography Matrix based Calibration

The following describes experiments with noise when using the homography based constraints for synchronization calibration.

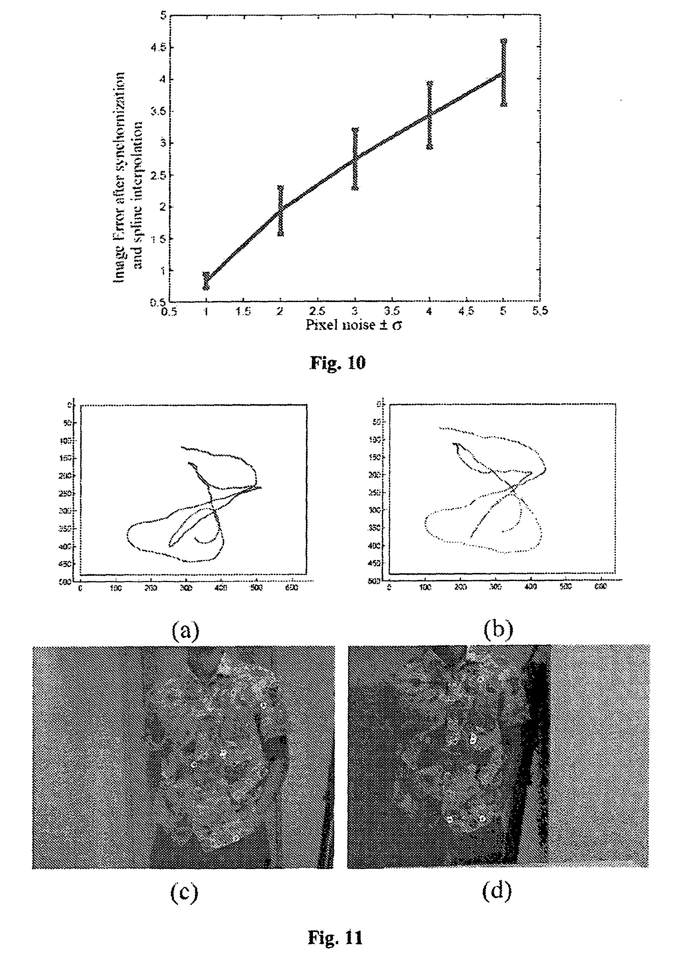

Uniform distribution of noise ($\sigma \in [1,5]$) was added to simulated images of points moving in a plane. These noisy points were then used to build the image trajectory modelled by splines (see Eq. 2). Finally synchronization calibration was performed using the method according to the invention. Fig. 10 shows the error in correctly estimating the image location of a scene point in the second asynchronized camera view given its coordinate in the first view. Note that the average error across all four cameras as well as the variance is presented here. Note this error also includes errors due to interpolation of noisy image data with splines. However, the estimated "synchronized" point locations are still within acceptable limits of the (added) noise.

After thousands of experiments simulated with noise it can be seen that the estimation of the synchronization parameters and camera network calibration can be performed with satisfactory results.

**Experiments with Real Camera Networks**

Finally, results of calibrating two real camera networks consisting of four and seven cameras, respectively, are described. Asynchronicity was injected by appropriately dropping frames from the image sequences to simulate variations in frame rate as well as time shifts. Results of calibration including synchronization, intrinsic and extrinsic parameters are presented using the methods according to the invention. Furthermore, a 3D reconstruction from unsynchronized videos using the approach according to the invention is presented.

**Four-Camera Setup**

The four camera system used did not possess hardware synchronization thereby hindering precise ground truth measurements. However, the configuration was optimally setup such that every camera captured video at 30Hz with almost no lag (time shift). In order to obtain ground truth calibration, a standard approach was used (Y. Caspi and M. Irani. Spatio-Temporal Alignment of Sequences. IEEE Trans. PAMI., 24(11), 2002.). Based on this, the calibration methods according to the invention was evaluated.

The network was first calibrated using the homography based method for which video was captured by pointing a laser light onto a planer surface. Alternatively, the epipolar constraint based method was tested using both an LED marker as well as automatically tracked scene features. Figs. 11a and 11b shows the typical trajectories of a moving LED marker and Figs. 11c, d the automatically matched and tracked image features from two views that were used for calibration.

Table 1 shows the estimated synchronization parameters $(\alpha, \beta)$ using the three approaches described above.

Table 1

| Ground Truth $(\alpha, \beta)$ | Homography Light Marker | Fundamental Matrix | |
|---|---|---|---|
| | | Light Marker | Scene Feature |
| (0.5, 0) | (0.49997, 0.10568) | (0.4999, -0.31788) | (0.4999,-0.0587) |
| (1, -10) | (0.99986, -10.14900) | (1.0000, -10.92800) | (1.0005, -9.9430) |
| (0.5, -5) | (0.49994, -4.993000) | (0.49999, -5.3704) | (0.5004, -4,9878) |

As can be seen, all compare well to the ground truth used to simulated synchronicity.

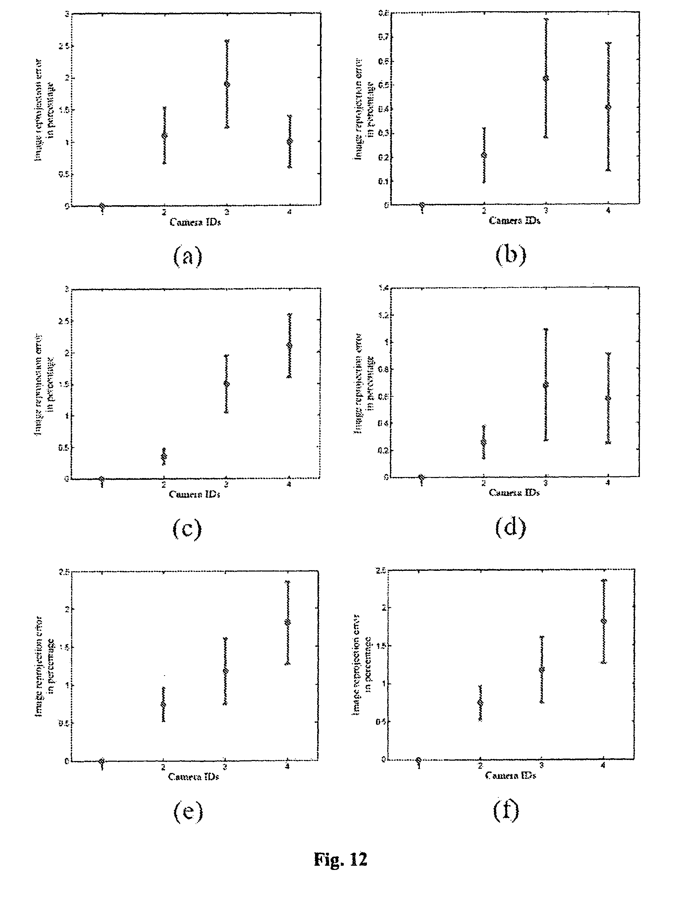

Even more revealing and compelling is the very low image reprojection error as shown in Figs. 12b, d, f. Surprisingly though, when camera calibration was performed for a "synchronized" network (i.e., no frames dropped), the image reprojection error is slightly higher at times as seen in Figs. 12 a, c, e. This could be attributed to (i) the larger set of points used for calibration because for every point in one view we estimate its interpolated match in all others and vice versa; and (ii) the tolerance to noise by virtue of allowing a match to slide along its motion trajectory.

**Seven-Camera Setup**

The second setup evaluated consists of seven cameras synchronized by hardware. As a result truly synchronized ground truth video could be obtained as well as accurately simulated asynchronized videos by again dropping frames appropriately. The objective of this experiment however was not only to perform calibration, but also 3D reconstruction from unsynchronized video sequences.

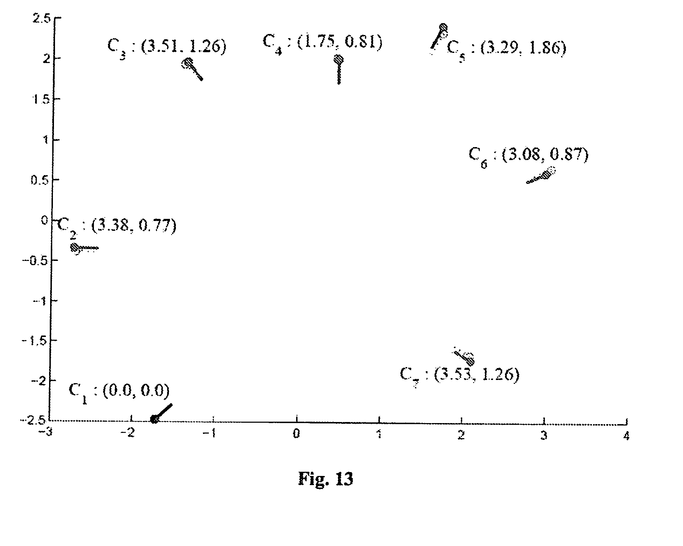

As before we first estimate synchronization and calibrate the camera network using a moving LED marker and the epipolar constraint based approach. Fig. 13 compares the ground truth pose (extrinsic) to our estimation together with the mean and standard deviation $(\mu, \sigma)$ in image reprojection errors.

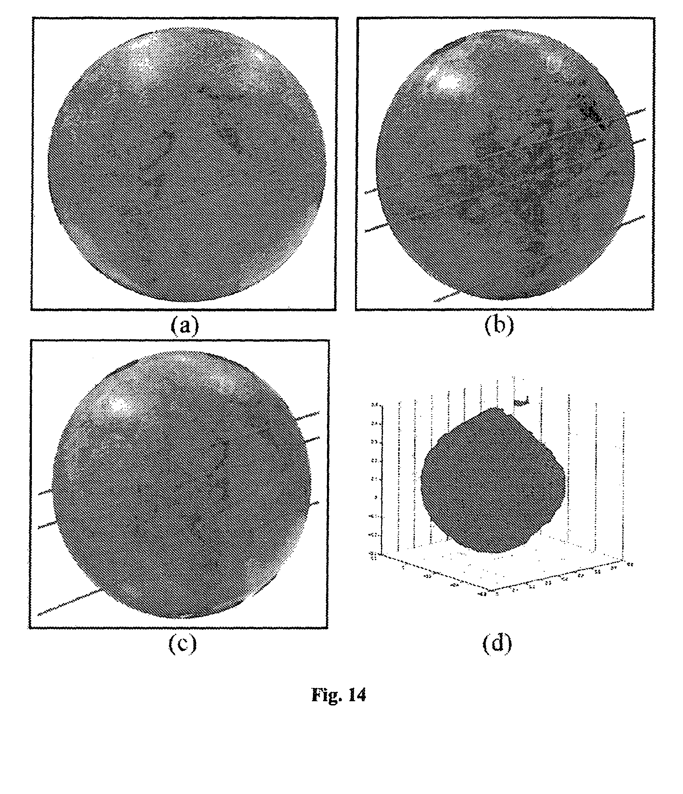

The effects of asynchronization on 3D reconstruction are now described. Two cameras in the above setup were simulated to run at 15Hz, with the second camera starting 3sec. after the first. Fig. 14a shows frame i of video from the first camera and randomly selected points on the visible globe. Ignoring asynchronization, if we consider the matching frame i also in the second view (Fig. 14b), we see that the corresponding epipolar lines do not to pass through the matching image points. However, as shown in Fig. 14c, after synchronization calibration, the epipolar lines do pass through the right image matches and also enable 3D reconstruction from asynchronous video streams as shown in Fig. 14d.

Although the invention has been described in connection with specific exemplary embodiments, it should be understood that various changes, substitutions, and alterations can be made to the disclosed embodiments without departing from the scope of the invention as set forth in the appended claims.

**Claims**

1. Method of self-calibrating asynchronized camera networks comprising a plurality of cameras, C, comprising the steps of:

   a) providing digital image data from at least two cameras of said camera network, wherein for each pair of cameras a frame with frame index $f_1$, in a first camera, $C_1$, is related to a frame with frame index $f_2$, of a second camera, $C_2$, as $f_2 = \alpha \cdot f_1 + \beta$, wherein $\alpha$ and $\beta$ are parameters representing the asynchonization between the two cameras;
   b) modelling the trajectory of matched features across multiple frames per camera of said pair of cameras using spline interpolation using splines as $p(f_2) = \sum_{i=0}^{N} g_i(f_2) \cdot C_i$, wherein $g_i(\cdot)$ and $C_i$ denote the basis function and spline coefficients respectively and $p$ the image coordinate as a function of the frame number;
   c) performing a non-linear search for the synchronization parameters $\alpha$ and $\beta$ for said pair of cameras iterating until convergence on the basis of the modelled trajectories.

2. The method of claim 1, wherein step c) comprises the steps of:

   c1) estimating for every point $x_1$ in the image of the first camera, $C_1$, the corresponding sub-frame feature location $s(\alpha f_1 + \beta)$ using hypothesized synchronization parameters $\alpha$ and $\beta$;
   c2) linearly estimating the fundamental matrix F representing epipolar geometry constraints for the estimated image point locations;
   c3) calculating the geometric error for the estimated fundamental matrix F; and
   c4) minimizing the geometric error by repeating steps c1) through c3) for new synchronization parameters $\alpha$ and $\beta$.

3. The method of claim 2, wherein the epipolar geometry constraint is given by:

$$x_1' F s(\alpha f_1 + \beta) = 0$$

4. The method of claim 1, wherein step c) comprises the steps:

   c1) estimating for every point $x_1$ in the image of the first camera, $C_1$, the corresponding sub-frame feature location $s(\alpha f_1 + \beta)$ using hypothesized synchronization parameters $\alpha$ and $\beta$;
   c2) linearly estimating the homography matrix H representing homography constraints for the estimated image point locations;
   c3) calculating the geometric error for the estimated homography matrix H; and
   c4) minimizing the geometric error by repeating steps c1) through c3) for new synchronization parameters $\alpha$ and $\beta$.

5. The method of claim 4, wherein the homography constraint is given by:

$$x_1 \cong H \cdot s(\alpha f_1 + \beta)$$

6. The method of any of claims to 1 to 5, performing steps a) through c) for all pairs of cameras of said camera network with overlapping views, resulting in a number of relative synchronization parameters $(\alpha, \beta)_{ij}$ for all pairs of cameras with overlapping views, and determining a globally consistent set of pair-wise synchronization parameters.

7. The method of any of claims 1 to 6, further comprising the steps of:

1) for all matched image points viewed by at least two cameras in a set of cameras $C_c$, computing their effective 3D locations, resulting in a cloud of known 3D points P in the scene, wherein $C_c$ denote the set of currently calibrated cameras among the set of all cameras;

2) for every camera $C_n = C \setminus C_c$ that is not yet calibrated, determining the subset $C'_c$ that observe at least 6 points in P;

3) using known 3D points and their image projections, linearly determining their projection matrices $P'_C$;

4) updating the set of calibrated cameras to also include the newly calibrated cameras $C'_c$;

5) repeating steps 1) through 4) until convergence is achieved.

**8.** The method of claim 7, further comprising the steps of decomposing the projection matrices into their corresponding intrinsic and extrinsic matrices; and performing non-linear estimation of all camera parameter for all cameras in the network.

**9.** System for self-calibrating asynchronized camera networks comprising a plurality of cameras, C, the system comprising means for receiving digital image data from at least two cameras of said camera network, wherein for each pair of cameras a frame with frame index $f_1$ in a first camera, $C_1$, is related to a frame with frame index $f_2$, of a second camera, $C_2$, as $f_2 = \alpha \cdot f_1 + \beta$, wherein $\alpha$ and $\beta$ are parameters representing the asynchonization between the two cameras; means for modelling the trajectory of matched features across multiple frames per camera of said pair of cameras using spline interpolation using spline interpolation using splines as $$p(f_2) = \sum_{i=0}^{N} g_i(f_2) \cdot C_i ,$$

wherein $g_i(\cdot)$ and $C_i$ denote the basis function and spline coefficients respectively and $p$ the image coordinate as a function of the frame number; and means for performing a non-linear search for the synchronization parameters $\alpha$ and $\beta$ for said pair of cameras iterating until convergence on the basis of the modelled trajectories.

**Patentansprüche**

**1.** Verfahren zur Selbstkalibrierung asynchronisierter Kameranetzwerke, umfassend eine Vielzahl von Kameras C, umfassend die folgenden Schritte:

a) Bereitstellen von digitalen Bilddaten von zumindest zwei Kameras des Kameranetzwerks, wobei für jedes Paar von Kameras ein Frame mit einem Frame-Index $f_1$ in einer ersten Kamera $C_1$ mit einem Frame mit einem Frame-Index $f_2$ einer zweiten Kamera $C_2$ als $f_2 = \alpha \cdot f_1 + \beta$ in Beziehung steht, wobei $\alpha$ und $\beta$ Parameter sind, welche die Asynchronizität zwischen den beiden Kameras darstellen;

b) Modellieren der Kurve übereinstimmender Merkmale über mehrere Frames je Kamera des Paars von Kameras anhand der Spline-Interpolation unter Verwendung von Splines als $$p(f_2) = \sum_{i=0}^{N} g_i(f_2) \cdot C_i ,$$ wobei $g_i$

$(\cdot)$ und $C_i$ jeweils die Basisfunktion bzw. die Spline-Koeffizienten bezeichnen, und $p$ die Bildkoordinate als eine Funktion der Frame-Nummer;

c) Durchführen einer nicht-linearen Suche für die Synchronisierungsparameter $\alpha$ und $\beta$ für das Paar von Kameras, welche bis zur Konvergenz auf Basis der modellierten Kurven iteriert wird.

**2.** Verfahren nach Anspruch 1, wobei Schritt c) die folgenden Schritte umfasst :

c1) Schätzen der entsprechenden Subframe-Merkmalsposition $s(\alpha f_1 + \beta)$ unter Verwendung hypothetischer Synchronisationsparameter $\alpha$ und $\beta$ für jeden Punkt $x_1$ in dem Bild der ersten Kamera $C_1$;

c2) lineares Schätzen der Fundamentalmatrix F, welche epipolare Geometriebeschränkungen für die geschätzten Bildpunktpositionen darstellt;

c3) Berechnen des geometrischen Fehlers für die geschätzte Fundamentalmatrix F; und

c4) Minimieren des geometrischen Fehlers durch Wiederholen der Schritte c1) bis c3) für neue Synchronisationsparameter $\alpha$ und $\beta$.

**3.** Verfahren nach Anspruch 2, wobei die epipolare Geometrie-Beschränkung gegeben ist durch:

$$x_1{}^t \, F \, s(\alpha f_1 + \beta) = 0$$

**4.** Verfahren nach Anspruch 1, wobei Schritt c) die folgenden Schritte umfasst:

c1) Schätzen der entsprechenden Subframe-Merkmalsposition $s(\alpha f_1 + \beta)$ unter Verwendung hypothetischer Synchronisationsparameter $\alpha$ und $\beta$ für jeden Punkt $x_1$ in dem Bild der ersten Kamera $C_1$;
c2) lineares Schätzen der Homographiematrix H, welche Homographiebeschränkungen für die geschätzten Bildpunktpositionen darstellt;
c3) Berechnen des geometrischen Fehlers für die geschätzte Homographiematrix H; und
c4) Minimieren des geometrischen Fehlers durch Wiederholen der Schritte c1) bis c3) für neue Synchronisationsparameter $\alpha$ und $\beta$.

**5.** Verfahren nach Anspruch 4, wobei die Homographie-Beschränkung gegeben ist durch:

$$x_1 \cong H \cdot s(\alpha f_1 + \beta)$$

**6.** Verfahren nach einem der Ansprüche 1 bis 5, welches die Schritte a) bis c) für alle Paare von Kameras des Kameranetzwerks mit überlappenden Ansichten ausführt und in einer Anzahl von relativen Synchronisationsparametern $(\alpha, \beta)_{ij}$ für alle Paare von Kameras mit überlappenden Ansichten führt, wobei ein global konsistenter Satz von paarweisen Synchronisationsparametern bestimmt wird.

**7.** Verfahren nach einem der Ansprüche 1 bis 6, des Weiteren umfassend die folgenden Schritte:

1) Berechnen der effektiven 3D-Positionen für alle übereinstimmenden Bildpunkte, die von zumindest zwei Kameras in einer Menge von Kameras $C_C$ erfasst werden, was in einer Wolke bekannter 3D-Punkte P in der Szene resultiert, wobei $C_C$ den Satz aktuell kalibrierter Kameras innerhalb der Menge aller Kameras bezeichnet;
2) Bestimmen der Untermenge $C'_C$, welche zumindest 6 Punkte in P beobachtet, für jede Kamera $C_n = C \mid C_C$, die noch nicht kalibriert ist;
3) lineares Bestimmen der Projektionsmatrizen $P'_C$ unter Verwendung bekannter 3D-Punkte und ihrer Bildprojektionen;
4) Aktualisieren der Menge von kalibrierten Kameras, um auch die neu kalibrierten Kameras $C'_C$ einzuschließen;
5) Wiederholen der Schritte 1) bis 4), bis Konvergenz erreicht wird.

**8.** Verfahren nach Anspruch 7, des Weiteren umfassend die folgenden Schritte: Zerlegen der Projektionsmatrizen in deren entsprechende intrinsische und extrinsische Matrizen; und Durchführen einer nicht-linearen Schätzung aller Kameraparameter für alle Kameras in dem Netzwerk.

**9.** System zur Selbstkalibrierung asynchroner Kameranetzwerke umfassend eine Vielzahl von Kameras C, wobei das System umfasst:

Mittel zum Empfangen digitaler Bilddaten von zumindest zwei Kameras des Kameranetzwerks, wobei für jedes Paar von Kameras ein Frame mit einem Frame-Index $f_1$ in einer ersten Kamera $C_1$ mit einem Frame mit einem Frame-Index $f_2$ einer zweiten Kamera $C_2$ als $f_2 = \alpha \cdot f_1 + \beta$ in Beziehung steht, wobei $\alpha$ und $\beta$ Parameter sind, welche die Asynchronizität zwischen den beiden Kameras darstellen;
Mittel zum Modellieren der Kurve übereinstimmender Merkmale über mehrere Frames je Kamera des Paars von Kameras anhand der Spline-Interpolation unter Verwendung von Splines als $\quad p(f_2) = \displaystyle\sum_{i=0}^{N} g_i(f_2) \cdot C_i \, , \, ,$

wobei $g_i(\cdot)$ und $C_i$ jeweils die Basisfunktion bzw. die Spline-Koeffizienten bezeichnen, und $p$ die Bildkoordinaten als eine Funktion der Frame-Nummer; und
Mittel zum Durchführen einer nicht-linearen Suche für die Synchronisierungsparameter $\alpha$ und
$\beta$ für das Paar von Kameras, welche bis zur Konvergenz auf Basis der modellierten Kurven iteriert wird.

**Revendications**

1. Procédé d'auto-calibration des réseaux asynchrones des caméras comprenant un pluralité de caméras C, le procédé comprenant les étapes suivants :

   a) fournir des données d'image numériques d'au moins deux caméras dudit réseau de caméras, dans lequel, pour chaque paire de caméras, un trame avec l'index de trame $f_1$ dans une première caméra $C_1$ est relié à un trame avec l'index de trame $f_2$ d'une seconde caméra $C_2$ de la formes $f_2 = \alpha \cdot f_1 + \beta$, dans lequel $\alpha$ et $\beta$ sont des paramètres représentant l'asynchronisation entre les deux caméras ;
   b) modéliser la trajectoire des caractéristiques coïncidents sur plusieurs trames pour chaque caméra de ladite paire de caméras à l'aide de l'interpolation spline en utilisant des splines $p(f_2) = \sum\limits_{i=0}^{N} g_i(f_2) \cdot C_i$ , où $g_i$

   $(\cdot)$ et $C_i$ respectivement représentent la fonction de base et des coefficients des splines, et $p$ représente les coordonnées de l'image en fonction de la nombre de trame ;
   c) effectuer une recherche non-linéaire pour les paramètres de synchronisation $\alpha$ et $\beta$ pour ladite paire de caméras, en réitérant jusqu'à ce que la convergence basée sur les trajectoires modélisées soit établie.

2. Procédé selon la revendication 1, dans lequel l'étape c) comprend les étapes suivantes :

   c1) estimer, pour chaque point $x_1$ dans l'image de la première caméra $C_1$, la position d'image sous-trame correspondante s($\alpha f_1 + \beta$), en utilisant des paramètres de synchronisation $\alpha$ et $\beta$ supposés ;
   c2) estimer, en manière linéaire, la matrice fondamentale F représentant des contraintes de géométrie épipolaire pour les positions de point d'image estimées ;
   c3) calculer l'erreur géométrique pour la matrice fondamentale F estimée ; et
   c4) réduire au minimum l'erreur géométrique en répétant les étapes c1) à c3) pour des paramètres de synchronisation $\alpha$ et $\beta$ nouveaux.

3. Procédé selon la revendication 2, dans lequel la contrainte de géométrie épipolaire est la suivante :

$$x_1^{\mathrm{t}} \, F \, s(\alpha f_1 + \beta) = 0$$

4. Procédé selon la revendication 1, dans lequel l'étape c) comprend les étapes suivantes :

   c1) estimer, pour chaque point $x_1$ dans l'image de la première caméra $C_1$, la position d'image sous-trame correspondante s($\alpha f_1 + \beta$), en utilisant des paramètres de synchronisation $\alpha$ et $\beta$ supposés ;
   c2) estimer en manière linéaire, la matrice d'homographie H représentant des contraintes d'homographie pour les positions de point d'image estimées ;
   c3) calculer l'erreur géométrique pour la matrice d'homographie H estimée ; et
   c4) réduire au minimum l'erreur géométrique en répétant les étapes c1) à c3) pour des paramètres de synchronisation $\alpha$ et $\beta$ nouveaux.

5. Procédé selon la revendication 4, dans lequel la contrainte d'homographie est la suivante :

$$x_1 \cong H \cdot s(\alpha f_1 + \beta)$$

6. Procédé selon l'une quelconque des revendications 1 à 5, effectuant les étapes a) à c) pour toutes les paires de caméras dudit réseau de caméras avec des vues superposées, résultant en un nombre des paramètres de synchronisation relatives $(\alpha, \beta)_{ij}$ pour toutes les paires de caméras avec des vues superposées, et déterminant un ensemble globalement consistant des paramètres de synchronisation appairées.

7. Procédé selon l'une quelconque des revendications 1 à 6, comprenant en outre les étapes suivantes :

1) calculer, pour tous les points d'image coïncidents vus par au moins deux caméras dans un ensemble de caméras $C_C$, leurs positions en 3D effectives, résultant en une nuage P de points en 3D connus dans la scène, où $C_C$ représente l'ensemble des caméras actuellement calibrées dans l'ensemble de toutes les caméras ;

2) déterminer, pour chaque caméra $C_n = C \mid C_C$ qui n'est pas encore calibrée, le sous-ensemble $C'_C$ qui observe au moins 6 points dans P ;

3) en utilisant des points 3D connus et leurs projections d'image, déterminer en manière linéaire leurs matrices de projection $P'_C$ ;

4) mettre à jour l'ensemble des caméras calibrées afin de comprendre les caméras nouvellement calibrées $C'_C$ aussi ;

5) répéter les étapes 1) à 4) jusqu'à ce que la convergence soit établie.

8. Procédé selon la revendication 7, comprenant en outre les étapes de décomposer les matrices de projection en leurs matrices intrinsèques et extrinsèques ; et effectuer une estimation non-linéaire d'une matrice de projection paramétrisée pour tous les caméras du réseau.

9. Système pour l'auto-calibration des réseaux asynchrones des caméras comprenant un pluralité de caméras C, le système comprenant

des moyens pour recevoir des données d'image numériques d'au moins deux caméras dudit réseau de caméras, dans lequel, pour chaque paire de caméras, un trame avec l'index de trame $f_1$ dans une première caméra $C_1$ est relié à un trame avec l'index de trame $f_2$ d'une seconde caméra $C_2$ de la forme $f_2 = \alpha \cdot f_1 + \beta$, dans lequel $\alpha$ et $\beta$ sont des paramètres représentant l'asynchronisation entre les deux caméras ;

des moyens pour modéliser la trajectoire des caractéristiques coïncidentes sur plusieurs trames d'image pour chaque caméra de ladite paire de caméras à l'aide de l'interpolation spline en utilisant des splines

$$p(f_2) = \sum_{i=0}^{N} g_i(f_2) \cdot C_i \,, \quad \text{où } g_i(\cdot) \text{ et } C_i \text{ respectivement représentent la fonction de base et des coefficients}$$

des splines, et $p$ représente les coordonnées de l'image en fonction de la nombre de trame ; et

des moyens pour effectuer une recherche non-linéaire pour les paramètres de synchronisation $\alpha$ et $\beta$ pour ladite paire de caméras, en réitérant jusqu'à ce que la convergence basée sur les trajectoires modélisées soit établie.

Fig. 1

Fig. 2

**Fig. 3**

**View A**

H₁

H₀

**View B**

**Fig. 4**

H

H

H

**View A**

**View B**

**Fig. 5**

Fig. 6a

Fig. 6b

Fig. 6c

**Fig. 7**

**Fig. 8**

(a)

(b)

**Fig. 9**

(c)

(d)

**Fig. 9**

**Fig. 10**

(a)

(b)

(c)

(d)

**Fig. 11**

Fig. 12

**Fig. 13**

(a)

(b)

(c)

(d)

**Fig. 14**